# EUROPEAN PATENT APPLICATION

(11) **EP 1 154 090 A1**
(43) Date of publication of application: **14.11.2001**
(21) Application number: 01109852.2
(22) Date of filing: 23.04.2001
(51) Int. Cl.: E04C 2/52, B27N 7/00, B29C 70/76, B29C 45/14

(54) **Method for producing composite articles and the composite article obtained**

(30) Priority: 11.05.2000 IT MI001046
(71) Applicant: POZZI AROSIO INDUSTRIA VERNICI SPECIALI DI ALESSANDRO POZZI & C. S.A.S., 22060 AROSIO BRIANZA (COMO) (IT)
(72) Inventor: Pozzi, Angelo, 22060 Arosio Brianza, (Como) (IT)
(74) Representative: Luksch, Giorgio, Dr.-Ing.

(57) **Abstract**

A method for producing an article comprising two outer covering components between which a core is interposed, the method comprising assembling the two outer components with the core interposed in such a manner that along at least one side of their outline there is a groove delimited along its base by the core and along its sides by the two outer components, then pouring into said groove a polymer-based material so that it occupies said groove to form a border and bond the two outer components together.

## Description

The present invention relates to a method for producing composite articles and the composite article obtained. The articles to which the invention relates are of the type comprising two outer covering components between which a core is interposed. Examples of these articles can substantially be panels, doors, flooring elements and semi-finished products in general.

With particular but not exclusive reference to the furniture sector, it is known to use panels comprising two flat outer covering components consisting of sheets or plates of plastic laminate between which there is interposed a core consisting of a relatively thick slab based on wooden chips bonded together by suitable binders; the chip material is extremely sensitive to moisture. To enable it to be used, such a panel must be rendered impermeable along its perimeter, and for this reason is provided with a border. The border can be represented by a strip, for example of thin plastic laminate, which is suitably coated with adhesive and applied under hot conditions along the edge of the panel. Another solution consists of deforming (hot-bending) the edge of one of the sheets to form the required protective border.

A drawback of the first of these solutions is that the strip is fragile, it is easily detached and does not ensure suitable protection for the core against moisture especially at the junction points.

A drawback of the second of these solutions lies in the fact that to obtain such a border, special costly laminates have to be used requiring relatively complex and delicate machining which can result in considerable scrap.

When applied to the furniture and similar sectors the invention enables reliable impermeabilization of the core to be obtained by a simple method which can be implemented either manually or automatically.

For example, the invention is suitable, in a surprisingly advantageous manner, for forming coverings for floors or paving, and also for forming furniture walls, doors and various semifinished products as it can structurally incorporate suitable means for the necessary assembly.

These and other objects which will be more apparent from the ensuing detailed description are attained according to the invention by a method comprising assembling the two outer components with the core interposed in such a manner that along at least one side of their outline there is a groove delimited along its base by the core and along its sides by the two outer components, then pouring into said groove a polymer-based material so that it occupies said groove and bonds the two components together.

In its most simple expression the article is distinguished by being provided with a border formed from a polymer-based material extending between said two outer components.

The polymer-based material can be polyurethane-based (of high, medium or low density), polyester-based, polyacrylic-based or epoxy-based. It can be compact, expanded, filled with inerts (for example electrically insulating) and incorporate electrically conductive means or parts or even inserts such as tubes, bushes or the like.

The two flat outer components can be of equal or different constitution. Materials suitable for these two components can for example be plastic laminates, plywood, metal or plastic sheets or films. The components can be inherently rigid or elastic.

The core can consist for example of conglomerates of any type of wood, rigid or elastomeric high density polyurethane, expanded polyurethane, composite reclaimed materials (for their upgrading) such as offcuts or scraps of various plastic materials, filled with inerts or not, and otherwise unreclaimable. The core can however, to satisfy special requirements (such as lightness), consist of low density rigid polyurethane, flexible polyurethane or integral polyurethane, or cellular or honeycomb materials of carbon, aluminium, plastic or paper.

The invention will be more apparent from the ensuing detailed description of two preferred embodiments thereof, provided by way of example with reference to the accompanying drawing, in which:
Figure 1 is a perspective view of an article in the form of a panel according to the invention;
Figure 2 is a partial sectional view on a larger scale showing an article during one stage of the method for its preparation according to the invention;
Figure 3 is a view similar to that of Figure 2 but in a subsequent stage of the method of the invention;
Figure 4 is a view similar to that of Figure 3 in a further subsequent stage of the method of the invention; and
Figure 5 is a section through two opposite edges of an article provided with coupling means on opposing edges.

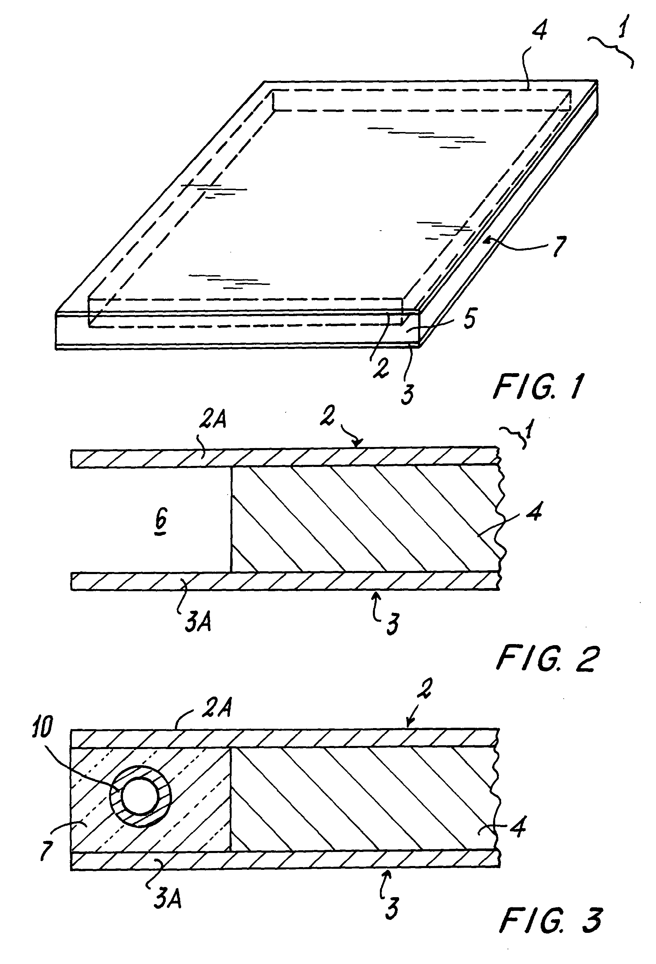

In the figures, the reference numeral 1 indicates overall an article of the invention, the article in this example being a panel comprising two flat covering components (which can be of equal or different type or can also not be flat) 2 and 3 between which there is interposed a core 4 which can be rigid with the two components 2 and 3, or not. The article, which is described in greater detail hereinafter, comprises a border 7 of polymer binding material, for example high density rigid polyurethane, which extends into a, in this example, perimetral groove 6, delimited along its base by the core 4, and along its sides by the outlines or projecting parts, which in this example are perimetral (see Figure 2) and are indicated by 2A and 3A, of the components 2 and 3.

In the example of Figure 1 the components 2 and 3 are flat and of conventional plastic laminates, whereas the core 4 is of chipboard joined (bonded) to the two flat components.

The method of the invention requires that in assembling the two components 2 and 3 with the core 4 the said groove 6 (shown in Figure 2) is left.

Into this groove there is poured in any suitable known manner (for example manually or mechanically, in a mould or not) a panel binding material at least for the two components 2 and 3 (for example the said polyurethane) which fills this groove and on solidifying gives rise to the border 7 which binds together the two components 2, 3 along the edges 2A, 3A, so making moisture inaccessible to the core which could be damaged thereby (and certainly would be if, as in the example, the core 4 is of chipboard).

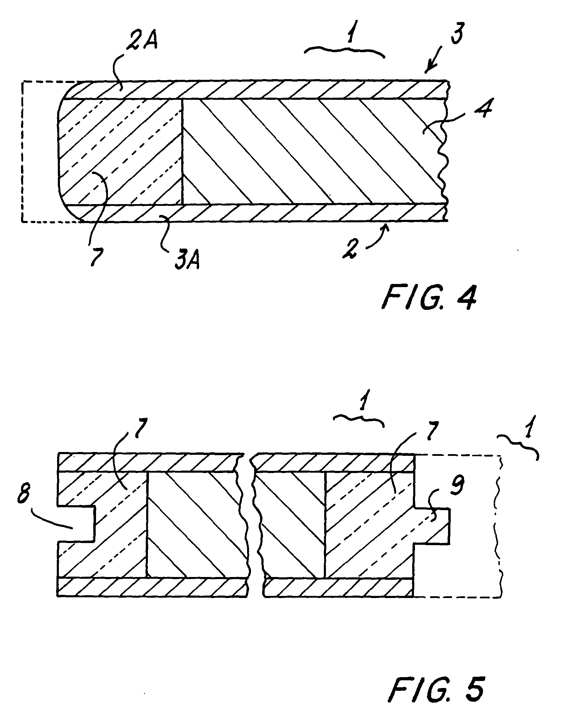

The resultant article (shown in Figures 1 and 3) presents a flat outline and can be used in that state for the most varied applications, but can, as shown in Figure 4, be subjected to a mechanical profiling operation by a chipping tool so that the edge partly or totally assumes, for example, the rounded shape shown in Figure 4.

As shown in Figure 5, to enable the opposing edges of the article to be coupled together, they can present edges provided with a groove 8 and, respectively, with a matching coupling rib 9. Such a shape can be obtained by casting the material for the border 7 in a mould and counter-mould or by successive mechanical shaping (for example milling).

Figure 3 shows another embodiment of the invention; this shows how inserts can be embedded or confined in the border 7 (or rather in its constituent material). In this example the embedded insert is a through tube 10 (usable for example for the passage of electrical conductors or pins).

The aforedescribed examples refer to covering components in the form of plastic laminates, a core 4 in the form of chipboard, and to high density rigid polyurethane.

The invention is not however limited to these specific materials and can be used either with flat (i.e. substantially two-dimensional) covering components or with three-dimensional components.

For example, if plastic laminates (which can also be anti-scratch and/or self-extinguishing) are used, the chipboard can be replaced (for structural lightness) by any cellular material (for example honeycomb) chosen from kevlar, carbon, aluminium, printable polymer materials or cardboard, with the border of rigid polyurethane. With plastic laminates, cores of flexible polyurethane can also be used, in which case the border can be of elastic polyurethane. Expanded polyurethane can also be used as the core, sandwiched between the plastic laminates.

If the article is to serve as a wing or door, inserts can be disposed (embedded) in the relative border for hinging purposes, or conventional hinge elements can be applied in view of the strength and mechanical workability of the border.

Reference has been made hereinbefore to a series of particular materials suitable for implementing the invention.

The invention is however also applicable to other materials. For example the covering components can consist of plywood/wood, faced masonite, sheets of plastic (epoxy) materials including coextruded plastic (such as ABS and polystyrene), glass sheets or glass fibre sheets, giving particular attention to those chemical-physical characteristics required or determined by the use of the article, such as hardness and elasticity, self-extinguishing, anti-scratch, anti-slip, antiacid and impermeability characteristics. Metal sheets can also be used (as experience has demonstrated).

The core can be chosen from the most varied rigid or flexible materials, even scrap materials as already stated.

The border material, in addition to polyurethane in the most varied forms in which it is currently used, can be chosen from the group formed from polyester, polyacrylic and epoxy resins, all pourable, which can be filled or not and coloured or not, depending on utilization requirements and on bonding compatibility between the border material and the covering material.

The following examples further illustrate the invention:

### EXAMPLE 1

The two outer components are represented by equal sheets of melamine plastic laminate and have a quadrilateral outline. The inner core is formed from conventional chipboard 3 cm thick, also quadrilateral but with lesser side lengths to accommodate the groove.

The two sheets are rigidly bonded to the core by a conventional urethane adhesive to form a composite.

The perimetral groove has a depth of about 1 cm. A polyurethane mixture is prepared (formed by intimately mixing 100 parts by weight of polyol with 100 parts by weight of isocyanates). The resultant mixture is poured into the groove on one side of the composite perimeter, the groove on the other three sides of this perimeter having been previously closed externally, but not occupied, by closure elements.

Adhesive tape, mould parts, fillets and the like were used as the closure elements. After a few minutes (about 3-5) the polyurethane mixture polymerized. The closure elements are removed to obtain a panel perfectly sealed along its perimeter.

The same method was used to obtain an article formed from two 3 mm sheets of plywood (as outer components) and a core formed from cellular cardboard material.

### EXAMPLE 2

Using the same materials, the polyurethane mixture of Example 1 was replaced by polyester casting resin in which 2 parts by weight of conventional catalyst were added to 100 parts by weight of resin. The polymerization time was about 20 min.

### EXAMPLE 3

Using the same materials, the polyurethane mixture of Example 1 was replaced by epoxy resin (100 parts by weight) and conventional catalyst (20 parts by weight). The polymerization time was about 50 min.

### EXAMPLE 4

Using the same materials, the polyurethane mixture of Example 1 was replaced by single-component acrylic resin. The polymerization time was about 60 min.

## Claims

1. A method for producing an article comprising two outer covering components between which a core is interposed, **characterised by** assembling the two outer components with the core interposed in such a manner that along at least one side of their outline there is a groove delimited along its base by the core and along its sides by the two outer components, then pouring into said groove a polymer-based material so that it occupies said groove to form a border and bond the two outer components together.

2. A method as claimed in claim 1, wherein the polymer material is chosen from the group consisting of polyurethane, polyester resin, polyacrylic resin and epoxy resin.

3. A method as claimed in claim 1 or claims 1 and 2, wherein the outer components are chosen from the group consisting of plastic laminates, metal sheets, glass sheets, sheets of plastic materials and composite sheets.

4. A method as claimed in claim 1 or claims 1 and 2 or claims 1, 2 and 3, wherein the core is chosen from the group consisting of chip material, cellular material including metal, reclaimed plastic material, cardboard, and rigid or elastic expanded materials.

5. A method as claimed in one or more of the preceding claims, wherein inserts are provided in the polymer-based material.

6. A method as claimed in one or more of the preceding claims, wherein after pouring and solidifying, the polymer-based material is subjected to mechanical shaping (profiling) machining.

7. A flat article comprising two outer flat covering components between which a core is interposed, **characterised by** presenting a border formed from polymer-based material extending along the interior of the article and between the outer components so as to bind them together.

8. An article as claimed in claim 7, wherein the border incorporates inserts.

9. An article as claimed in claim 7 or claims 7 and 8, wherein the border is profiled.

10. An article as claimed in one or more of claims from 7 onwards, wherein the border is profiled to enable it to be insertion-fitted to others.

11. An article as claimed in one or more of claims from 7 to 10, wherein the polymer material is chosen from the group consisting of polyurethane, polyester resin, polyacrylic resin and epoxy resin.

12. An article as claimed in one or more of claims from 7 onwards, wherein the outer components are chosen from the group consisting of plastic laminates, glass sheets, metal sheets, sheets of plastic materials and composite sheets.

13. An article as claimed in one or more of claims 7-12, wherein the core is chosen from the group consisting of chip material, cellular material including metal, reclaimed plastic material, cardboard, and rigid or elastic expanded materials.
